**Europäisches Patentamt**

**European Patent Office**

**Office européen des brevets**

(19)

(11) Publication number : **0 517 432 A1**

## (12) EUROPEAN PATENT APPLICATION

(21) Application number : **92304876.3**

(22) Date of filing : **28.05.92**

(51) Int. Cl.$^5$ : **A01G 9/24**

(30) Priority : **28.05.91 US 706377**

(43) Date of publication of application :
**09.12.92 Bulletin 92/50**

(84) Designated Contracting States :
**BE DE ES FR GB IT NL PT**

(71) Applicant : **Geophysical Engineering Company**
**1201 Third Avenue 40th Floor**
**Seattle, Washington 98101-3099 (US)**

(72) Inventor : **Assaf, Gad**
**5 Kosover Street**
**Rehovot (IL)**

(74) Representative : **Godwin, Edgar James**
**MARKS & CLERK 57-60 Lincoln's Inn Fields**
**London, WC2A 3LS (GB)**

(54) **Method of and means for conditioning air in an enclosure.**

(57) Growing plants (13) in a greenhouse (12) produce water vapor during the day due to plant transpiration. Warm, moist air in the greenhouse during daytime is cooled to recover water from the water vapor in the air. The recovered water is available for irrigating the plants. The air in the greenhouse is both cooled and dried during daytime by exchanging heat in the air with water in a reservoir (15) which is warmed thereby. During nighttime, water in the reservoir is cooled by exchanging heat in the water with ambient air in preparation for repeating the cooling of air in the enclosure with cool water during the next day.

FIG. 1

EP 0 517 432 A1

## Technical Field

This invention relates to a method of and means for conditioning the air in an enclosure, and more particularly an enclosure in the form of a greenhouse containing growing plants.

## Background Art

The use of greenhouses has increased over the years as a consequence of worldwide intensification of farming efforts. While greenhouses conventionally have been used for many years to grow fruits, vegetables, and flowers, the area dedicated to this type of farming is steadily increasing along with the sophistication of controls for greenhouses to optimize growing conditions and thus maximize production. Growing conditions are optimized by providing high quality water (i.e., water with a minimum salt content) for irrigation purposes, and providing climate control systems during daytime when the ambient temperature is likely to be relatively high, and during nighttime when the outside temperature is likely to be relatively low.

As is well known, carbon dioxide is often provided during the daytime to a greenhouse which is kept closed to maintain desirable high levels of carbon dioxide; and this usually results in an increase in temperature and humidity which are not conducive to plant health. Consequently, periodic venting of the greenhouse is required. Such venting controls temperature and humidity, but reduces the carbon dioxide level in the greenhouse.

A conventional approach to this problem is to utilize what is termed a latent heat converter wherein the greenhouse is kept closed during daytime hours, and the air is directly contacted with a concentrated brine solution. Water vapor in the air condenses on the hygroscopic brine thereby drying and cooling the air as sensible heat in the air and latent heat in the water vapor are transferred to the brine. While this approach, disclosed, for example, in U.S. Patent Nos. 4,707,995 and 4,819,447, is often satisfactory, a simpler technique in terms of equipment is often desirable. To this end, it is an object of the present invention to provide a new and improved method of and means for conditioning air in an enclosure, such as a greenhouse, which is less complicated than previous approaches, and which provides new and improved results.

## BRIEF DESCRIPTION OF INVENTION

The present invention provides a method for operating an enclosure having a source of water vapor, such as a greenhouse in which growing plants produce water vapor during the day due to plant transpiration, wherein the greenhouse is located in an environment in which the enthalpy of the inside air is greater than the enthalpy of the outside air for some period of time during a 24-hour period. For example, the temperature of the outside air during nighttime hours can be significantly less than the temperature of the air in the enclosure during daytime hours.

Enthalpy, or specific or total energy of air, can be expressed as follows:

$$C_p(T) \;+\; L(c)$$

where

C_p is the specific heat of air;

T is the temperature of the air;

L is the latent heat of the air (joule/gram vapor); and

c is the water vapor content of the air (gram/Kg air).

When moisture is referred to in this specification, reference is being made to water vapor content of air, i.e., gram vapor/kg air, and not to relative humidity.

The method of the present invention comprises cooling warm, usually moist, air in a greenhouse during some period of time (e.g., daytime hours), recovering in liquid water from the water vapor in the air that is cooled, and preferably using the recovered water to irrigate the plants. In this manner, the greenhouse can be kept closed to maintain a high level of carbon dioxide. In such case, the air in the greenhouse is both cooled and dried during daytime hours, by exchanging heat in the air with water, preferably maintained in a reservoir which is warmed thereby. During nighttime hours, or other time periods when the enthalpy of the outside air is less than the enthalpy of the inside air when it was cooled, the water in the reservoir is cooled by exchanging heat in the water with ambient air. When nighttime cooling is used, the cooling is carried out during the night in preparation for repeating the cooling of the ambient air in the enclosure during the next day.

In a preferred embodiment of the present invention, a direct contact air/water heat exchanger can be used to exchange heat between water and air in the enclosure. Here, the momentum of the water due to its flow draws the air into contact with the water such that sensible as well as latent heat is exchanged between the air and the water. Such an arrangement can eliminate the need to install air blowers. In this embodiment, two direct contact heat exchangers can be used. One can be used for exchanging heat between water usually supplied, preferably, from the bottom of the reservoir and the greenhouse air during the day when the enthalpy of the greenhouse air is relatively high (e.g., the air temperature is high), with the other heat exchanger exchanging heat between the water preferably coming from the upper portion of the reservoir, and the outside air having a low enthalpy (e.g., cool air).

Alternatively, either or both of the heat exchangers can be an indirect contact heat exchanger. Usually, the first heat exchanger will function during the day to transfer heat and vapor from the greenhouse to water in a reservoir, with the second heat exchanger functioning during the night to transfer heat and perhaps some vapor from the reservoir water to the ambient atmosphere. There are conditions that may be encountered during the day when the enthalpy of the outside air is low enough (e.g., a cool day) so that the two heat exchangers can function almost simultaneously, with the outside air extracting sensible heat and latent heat from water coming from the reservoir to one heat exchanger, and water supplied to the other heat exchanger collecting sensible heat as well as latent heat from the air in the greenhouse. In such case, the water reservoir, if used, can be very small because it is not required to store heat from day to night; and in some situations, a reservoir will not be necessary.

In an embodiment similar to that described above, it is possible to use the same heat exchanger (either direct or indirect) during the day as at night. In such case, the heat exchanger will be supplied with greenhouse air during the day, and with outside air during the night.

When a single direct contact heat exchanger is used, most of the water vapor from the greenhouse which condenses on the water during the day, will be evaporated. Even so, this embodiment of the invention is advantageous because it permits the greenhouse to be closed during the day and still cooled. Cooling of the greenhouse according to the present invention maintains sufficiently high levels of water vapor and carbon dioxide in the greenhouse. In the prior art, high humidity and cool conditions during the day are achieved by evaporative cooling in which outside air is introduced into the greenhouse after interacting adiabatically with fresh water. The resultant cold humid air is rapidly heated in the greenhouse, and consequently must be removed. During removal of this air, significant amounts of carbon dioxide are lost. Evaporative cooling thus consumes a considerable amount of fresh water, and does not permit enrichment of the greenhouse air with carbon dioxide. By operating in accordance with the present invention, it is estimated that more water vapor will be recovered in the greenhouse during the day than will be evaporated.

In another embodiment of the invention, a single indirect closed contact heat exchanger can be employed. During daytime, air in the greenhouse is exchanged with the air-side of the heat exchanger, and water, usually extracted from a reservoir, is exchanged with the water-side of the heat exchanger. Preferably, water from the reservoir is supplied to the heat exchanger from an elevation lower than the elevation to which water from the heat exchanger is returned to the reservoir. As the greenhouse air is cooled in the heat exchanger, water vapor in the air condenses on the air-side of the heat exchanger, and the condensate so produced may be returned to the reservoir, or it may be directed to the plants of the greenhouse for irrigation purposes. Thus, the water drawn by the plants from the soil in which the plants are growing, and then transpired into the greenhouse as a product of growth, is recovered and returned to the greenhouse minimizing the need for an external source of relatively of fresh water for irrigation purposes.

During nighttime, or other suitable time when cooling of the reservoir water can be effected, outside ambient air is exchanged with the air-side of the heat exchanger, and usually reservoir water is exchanged with the water-side of the heat exchanger. Preferably, water from the reservoir is applied to the heat exchanger from an elevation higher than the elevation to which water from the heat exchanger is returned. The heat extracted from the greenhouse during daytime is thus stored in the water in the reservoir and extracted during nighttime, or other suitable time.

Advantageously, in this embodiment, the heat exchanger is in the form of a plurality of vertically disposed plastic sleeves through which water from the reservoir flows. During daytime, air from the greenhouse, and during nighttime, or other suitable time, ambient air, flows on the outside of the tubes, preferably in a direction counter to the direction of the flow of liquid inside the tubes.

BRIEF DESCRIPTION OF THE DRAWINGS

Embodiments of the present invention are disclosed by way of example with reference to the accompanying drawings wherein:

Fig. 1 is a schematic block diagram illustrating the present invention;

Fig. 2 is a schematic block diagram of the present invention using a single indirect contact heat exchanger showing operation during daytime hours;

Fig. 2A is a schematic block diagram of the present invention using a single direct contact heat exchanger showing operation during daytime hours;

Fig. 3A is a schematic block diagram one embodiment of the present invention showing operation during nighttime hours;

Fig. 3B is similar to the apparatus shown in Fig. 2A but shows a second embodiment of the present invention for operation during nighttime hours;

Fig. 3C is a schematic block diagram of the further embodiment of the present invention showing operation during nighttime hours;

Fig. 4 is a schematic representation of an indirect contact heat exchanger suitable for use with the present invention; and

Fig. 4A is a schematic representation of an direct contact heat exchanger suitable for use with the present invention; and

DETAILED DESCRIPTION

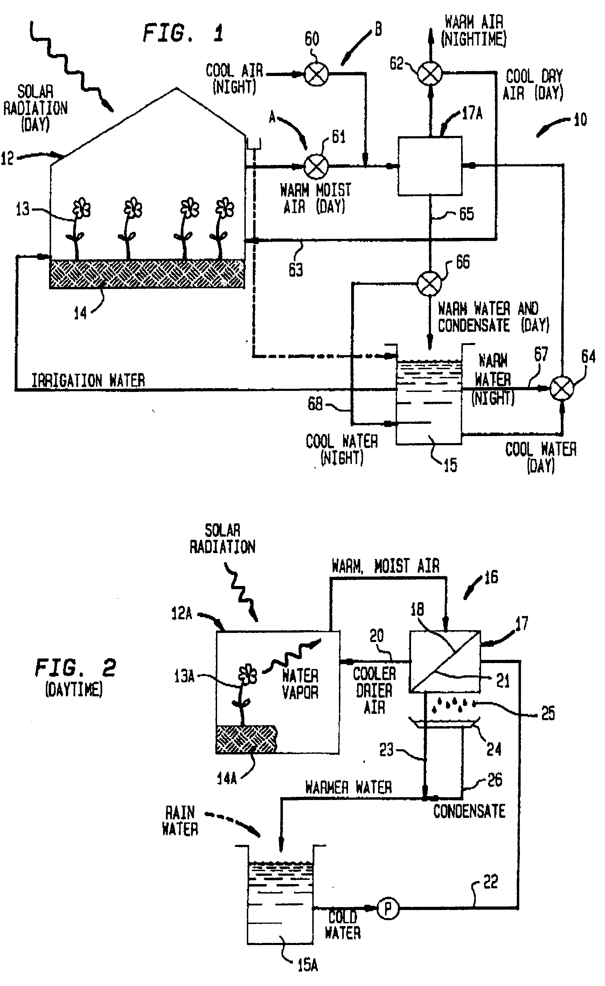

Referring now to Fig. 1 of the drawings, reference 10 designates apparatus according to the present invention for conditioning air in enclosure 12 which is shown in the form of a greenhouse containing growing plants 13. During daytime hours, solar radiation incident on the greenhouse warms the interior thereof, and plants 13 respond in a process termed "transpiration". During transpiration, the plants draw water from soil 14, absorb light and carbon dioxide from the air in the greenhouse and produce oxygen and water vapor which remain trapped in the greenhouse. In order to inhibit fungal diseases, both the temperature and the humidity in the greenhouse must be controlled. To this end, apparatus 10 according to the invention preferably includes reservoir 15 water, and first means A for cooling the warm and usually moist air in the greenhouse by exchanging heat in the air with water preferably coming from the reservoir.

Apparatus 10, preferably, also includes second means B for cooling water in the reservoir by exchanging heat in the water with outside ambient air whose enthalpy is lower than that of the inside air when it is cooled. Such outside air may be present in the nighttime, or during other time periods when the outside air is colder and/or less humid than the inside air when it is cooled. The present invention is particularly useful when the temperature of the outside air is less than the temperature of the water contained in reservoir 15.

To better illustrate the components of apparatus 10, reference is now made to Fig. 2 for the purpose of illustrating first means A of the invention which is indicated by reference numeral 16. As indicated, enclosure 12A includes plants 13A growing in soil 14A, the plants producing water vapor which remains inside enclosure 12A. Here, first means 16 includes indirect contact heat exchanger 17 having side 18 to which warm, and usually moist, air from enclosure 12A is supplied, and from which cooler dryer air is returned to the enclosure via conduit 20. Heat exchanger 17 has second side 21 to which cool water from reservoir 15A is applied through pipe 22 and from which warmed water is returned to the reservoir via pipe 23. First means A further includes collection means 24 for collecting condensate 25 produced by the cooling and drying of the air from the enclosure.

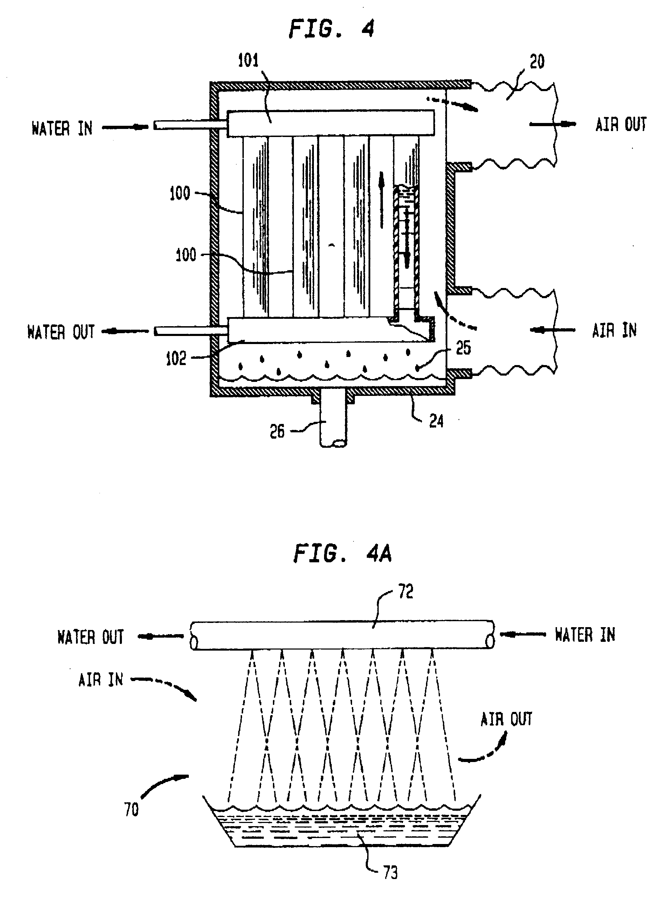

Heat exchanger 17 may be an indirect contact heat exchanger of the form shown in U.S. Patent No. 4,981,021, or it may be a direct contact. Fig. 4 shows indirect contact heat exchanger 17 as comprising a plurality of vertically disposed, thin walled (e.g., 0.1 to 1 mm.), plastic, tubular sleeves 100 attached to upper and lower headers 101, 102. Water from reservoir 15A flows inside sleeves 100; and air from enclosure 12A flows on the outside of these sleeves, preferably in a direction counter to the direction flow of liquid. A fan (not shown) may be provided to enhance air flow.

Because the water in reservoir 15A is cooler than the the warm, and usually moist, air in conduit 19 applied to the heat exchanger, moisture in the air condenses on surface 18 (i.e., on the outside of plastic sleeves 100) and falls by gravity into collection means 24 in the form of a sump that is connected by conduit 26 to conduit 23 for the purpose of directing the condensate into reservoir 15A.

The preferred construction for the heat exchanger of the present invention is shown by reference numeral 70 in Fig. 4A. Heat exchanger 70 is in the form of perforated conduit 72 vertically spaced above sump 73. The momentum of the cooling water as it falls from manifold 72 into sump 73 draws the air to be cooled into contact with the water doing away with the need for a fan. This heat exchanger operates basically as heat exchanger 17 in Fig. 2 except that direct contact is made by the water with the air. As a consequence, during the day, warm moist air, which will usually be present in the greenhouse, will be cooled and dried as a consequence of interaction with heat exchanger 70. Moisture will be added, however, to the greenhouse air if, for some reason, the air is dry. This is advantageous because plants have been found to grow better in the presence of a certain amount of moisture.

The use of direct contact heat exchanger 70 in accordance with the present ivention during daytime is illustrated in Fig. 2A. Reservoir 15A may be covered by darkened floating shield 71 preferably made from a foamed plastic that inhibits the amount of heat absorbed by the reservoir due to solar radiation. A reduction in this added heat reduces by a corresponding amount the heat that must be removed from the water at night. Moreover, such a cover can be removed at night or during periods suitable for cooling the water in the reservoir. Radiative cooling effected in this manner may be sufficient, under certain conditions, to cool the water in the reservoir to such a level that it will be suitable for performing cooling of the greenhouse or enclosure during cooling periods. In such case, almost no water from the reservoir is lost during cooling of the water.

In operation during daytime hours of the apparatus shown in Fig. 2, warm moist air from the enclosure is exchanged with heat exchanger 17, the cool water in the reservoir serving to reduce the temperature of the air and causing moisture therein to condense on heat exchanger surface 18. Thus, the air returned to enclosure 12A is cooler and drier than the air applied to the heat exchanger, and the water returned to reservoir 15A is warmed. The thus warmed water, being buoyant, will float near the top of the reservoir, while the cooler water in reservoir 15A, being heavier than the warmer water, sinks to the bottom of the reservoir. Preferably, water supplied to heat exchanger 17 during the daytime hours of operation is extracted from the reservoir at an elevation lower than the level at which condensate is returned to the reservoir as indicated in Fig. 2. A pump may be provided to enhance the exchange of water.

As a consequence of the operation illustrated in Fig. 2, the amount of water in reservoir 15A increases during the daytime in accordance with the amount of water produced by the plants growing in the enclosure. For example, the air in the enclosure during the day may be 28°C and its water content may be 20g. per kg. of air. If the water in the reservoir is effective to cool the air to 19°C, its water content will be reduced to 14g. per kg. air. The extra 6g. will condense on surface 21 of the heat exchanger and subsequently flow to reservoir 15A as described above. Based on these numbers, it is estimated that some 20kg./hour of air can be circulated for each square meter of the enclosure such that about 100g. of high quality, distilled water, can be recovered per hour per square meter of the greenhouse. This high quality water, together with any collected rain or other precipitation, can be used as a supply of water for irrigating the plants in the greenhouse.

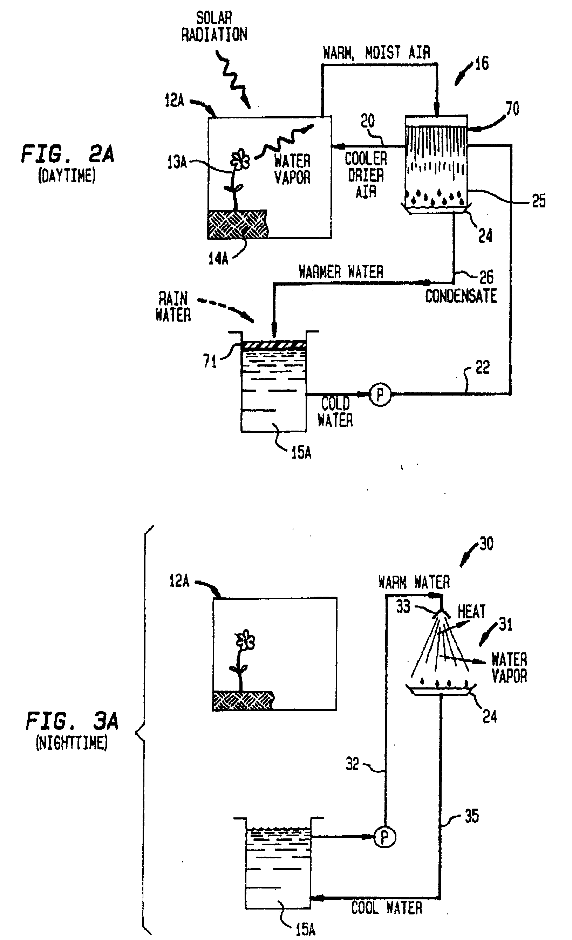

An embodiment of second means B of apparatus 10 described above in connection with Fig. 1, is illustrated in Fig. 3A. In this embodiment, the second means is indicated by reference 30 and includes direct contact, second heat exchanger 31 in which water from reservoir 15A directly contacts ambient air during a period of time when the enthalpy of the outside air is less than the enthalpy of the inside air after it is cooled. Such periods of time usually occur during nighttime, when the ambient air temperature drops below daytime levels.

Second means 30 includes piping 32 whose inlet is near the top of reservoir 15 and thus receives the warmest water in the reservoir, and spray head 33 which sprays water from the reservoir into the ambient air (i.e., the air outside enclosure 12A). Because the ambient air at night will be cooler than the water being sprayed (and/or relatively dry), sensible heat and/or latent heat is transferred to the air thus cooling the water. While some water in contact with the ambient air will evaporate, the remainder is collected in sump 34 and returned by pipe 35 to the lower portion of reservoir 15A. As a consequence of second means 30, the water in reservoir 15A will be cooled at night in preparation for the operation of means 16 as shown in Fig. 2 during the next day.

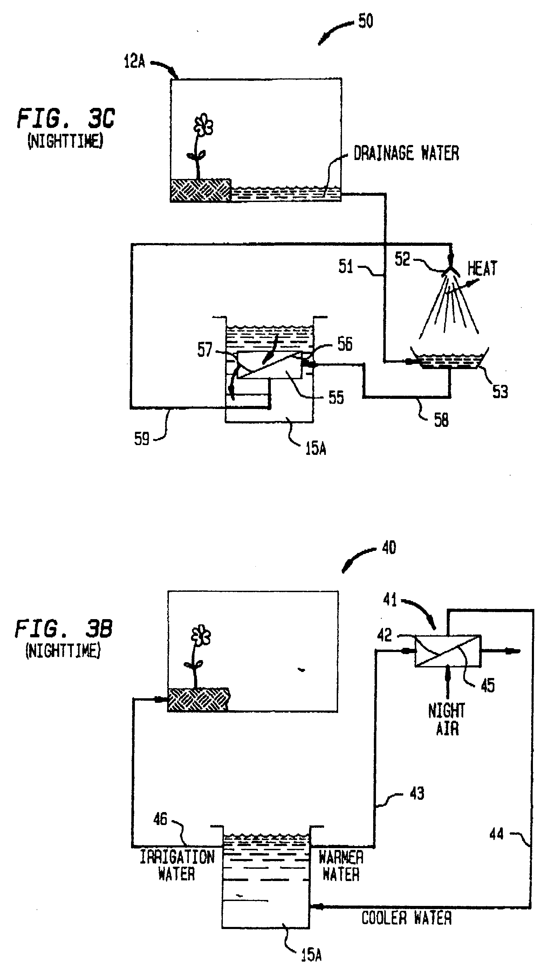

A further embodiment of the second means associated with apparatus 10 is shown in Fig. 3B by reference 40. As shown in Fig. 3B, heat exchanger 41 is an indirect contact heat exchager which operates to cool the fresh water in reservoir 15A. Heat exchanger 41 includes waterside 42 in contact with warmer water supplied thereto by pipe 43 from the upper portion of reservoir 15a. The warmer water in contact with surface 42 then flows via pipe 44 back to the lower portion of the reservoir.

Heat exchanger 41 also includes air-side 45 which is in contact with ambient night air. A fan (not shown) may be utilized for increasing the intensity of heat transfer across surfaces 42, 45. In this manner, heat stored in reservoir 15A and accumulated during daytime operation, which is illustrated in Fig. 2, is transferred to ambient air at night without the loss of any water. Thus, even though indirect heat exchanger 41 may be more costly than direct contact heat exchanger 31, shown in Fig. 3A, the expense may be offset against the value of the increase in the amount of water by reason of daytime operation. The extra water so obtained can be utilized for irrigation purposes as indicated by conduit 46 in Fig. 3B. This is particularly advantageous where irrigation water costs are high.

A further embodiment of second means B of apparatus 10 described above is indicated by reference numeral 50 in Fig. 3C. Means 50 utilizes drainage water from enclosure 12A in situations where the plants growing in the greenhouse have drainage water associated therewith for the purpose of indirectly cooling the reservoir water. The drainage water is applied by pipe 51 to reservoir 53 from which water is supplied via conduit 58 to indirect contact heat exchanger 55 having drainage water-side 56 and fresh water-side 57. Conduit 59 supplies drainage water from side 56 to spray head 52 which sprays water into the outside ambient air thereby cooling the drainage water which collects in reservoir 53. Suitable pumps may be employed to facilitate the exchange of drainage water.

Heat exchanger 55 may be immersed in reservoir 15A near the top thereof as shown in Fig. 3C. The cooled drainage water which is produced as a consequence of its direct contact with cool ambient night air extracts heat from the water contained in reservoir 15A thus cooling the water. No loss of water in reservoir 15A is involved in the operation of means 50 and thus excess water present in the reservoir can be used for irrigation as previously described. Finally, because a liquid-to-liquid heat transfer process is involved in this embodiment, heat exchanger 55 will be relatively small.

A complete system is illustrated in Fig. 1. As shown, during daytime, valve 61 is open and valve 60 is closed. Warm, and usually moist, air from greenhouse 12 flows into air-side 18A of heat exchanger 17A (which may be a direct, or an indirect type of heat exchanger) and exits through valve 62 which is adjusted so that the cooler and drier air that exits exchanger 17A is directed back to greenhouse 12 by duct 63. Cool water extracted near the bottom of reservoir 15 passes through valve 64 and into water-side 21A of heat exchanger 17A. The cool water is warmed by its extraction of heat from the air, and the warmed water is returned via pipe 65 and valve 66 to the upper portion of reservoir 15. Valve 66 is adjusted to ensure that the water returns to the top of the reservoir.

In addition to the water warmed by reason of the exchange of heat with the air in heat exchanger 17a, condensate formed on surface 21a is also returned via pipe 65 and valve 66 to the reservoir.

During nighttime, or other suitable time (i.e., when the enthalpy of the external air is less than that of the inside air after it is cooled), when the external ambient air temperature is less than daytime temperatures in the greenhouse, valve 60 is opened and valve 61 is closed allowing cool nighttime air to enter the air-side of heat exchanger 17A. In addition, valve 62 is adjusted so that air flowing in heat exchanger 17A is vented to the atmosphere. In addition, water valve 64 is adjusted so that water is drawn to the heat exchanger through pipe 67 near the top of the reservoir. In addition, valve 66 is adjusted so that water that exits heat exchanger 17A via pipe 65 now flows to the bottom of reservoir 15 via pipe 68.

At night, cool ambient night air is drawn through valve 60 into heat exchanger 17A and then exhausted to the atmosphere. Warm water from the reservoir passes into the heat exchanger and is cooled by reason of the heat extracted by the cool night air. The heat contained in the water in the reservoir, derived from the heat extracted from the greenhouse during the day, is thus transferred to the cool night air. As a consequence, on the next day, the temperature of the water in the reservoir will have been lowered to a level at which the water will be capable of absorbing heat during the subsequent daytime hours of operation.

As indicated, when indirect heat exchangers are used, the water in the reservoir is a part of a closed loop with the result that the increase in volume of water as a consequence of the cooling and drying of the air during daytime operation is available for irrigation purposes as illustrated in Fig. 1.

Preferably, water reservoir 15 should be shielded from solar radiation in all of the embodiments of the present invention discussed above to maintain the water temperature as low as possible. Shielding can be effected by floating a dark plastic cover on the surface of the reservoir in order to prevent evaporation. During the day, the plastic will be heated, and some of the heat will be transferred to the water in the reservoir. To minimize this heat transfer, a foamed insulation can be used as a cover on the reservoir. Any heating that occurs will result in stratification of the water in the reservoir and reduce the amount of heat absorbed from solar radiation. Furthermore, the hot plastic surface will radiate efficiently to the atmosphere at night. Alternatively, the reservoir can be shielded with an opaque cover to reduce solar insolation, the cover being removed at night to allow for long wave radiation cooling of the reservoir. In this case, such cooling may be effective in cooling the water in the reservoir to a level that is satisfactory for use without requiring a separate heat exchanger.

In the invention as described above, water in the reservoir is cooled by exchanging heat in the water with external air. However, the present invention also contemplates the exchange of heat in the water from the reservoir with the ground mass, or via long wave radiation to the sky. Thus, water from the reservoir may be passed through underground pipes to effect heat transfer to the ground, or exposed to the sky at night.

The present invention also contemplates minimizing mixing of water in the reservoir as water is exchanged with a heat exchanger. Thus, the inlet and outlet connections of the reservoir should be designed to minimize mixing in the reservoir when water is added thereto or extracted therefrom. To this end, the inlet and outlet should be large enough in cross-sectional area and configuration to guarantee that the Froude number associated with the inlet and outlet is less than unity.

While the present invention is particularly useful for cooling a greenhouse, it is also useful in cooling other types of enclosures that produce water vapor, such as enclosed swimming pools, etc. that need to be cooled.

The advantages and improved results furnished by the method and apparatus of the present invention are apparent from the foregoing description of the preferred embodiment of the invention. Various changes and modifications may be made without departing from the spirit and scope of the invention as described in the appended claims.

## Claims

1. A method for operating a greenhouse containing growing plants that produce water vapor during the day due to plant transpiration, said greenhouse being located in an environment in which ambient temperature at nighttime is significantly less than ambient temperature during daytime, said method comprising the steps of:

    a) cooling warm, moist air in the enclosure during daytime by exchanging heat in the air with water in a reservoir which is warmed thereby;

    b) cooling the water in the reservoir during nighttime by exchanging heat in the water with ambient air; and

    c) repeating steps a) and b) the next day.

2. A method according to claim 1 including the step of collecting condensate produced by the cooling of said warm, moist air during the daytime, and using the collected water to irrigate the plants.

3. Apparatus for conditioning air in an enclosure comprising:

    a) a reservoir of water;

b) first means for cooling warm, moist air in the enclosure by exchanging heat in the air with water in said reservoir; and

c) second means for cooling water in the reservoir by exchanging heat in the water in with ambient air that is cooler than the water.

4. Apparatus according to claim 3, wherein said first means includes an indirect contact first heat exchanger having one side to which warm, moist air from the enclosure is supplied, and from which cooler, drier air is returned to the enclosure, and having a second side to which cooler water from the reservoir is supplied and from which warmed water is returned to the reservoir, and collection means for collecting condensate produced by the cooling and drying of the air from the enclosure.

5. Apparatus according to claim 4, including means for returning said condensate to said reservoir.

6. An apparatus according to claim 4, including means for supplying water to said first heat exchanger from an elevation of said reservoir lower than the elevation to which said water from the first heat exchanger is returned to the reservoir.

7. An apparatus according to claim 4, wherein said second means includes a direct contact second heat exchanger in which water from the reservoir directly contacts ambient air.

8. Apparatus according to any of claims 3-7, wherein said enclosure is a greenhouse containing plants, said apparatus including means for irrigating said plants with water from said reservoir.

9. Apparatus according to claim 7, including means for supplying water to said second heat exchanger from an elevation of said reservoir higher than the elevation to which water from the second heat exchanger is returned to the reservoir.

10. Apparatus according to claim 8, wherein said greenhouse produces drainage water, said apparatus including means for exchanging heat in said drainage water with ambient air to produce cooler drainage water, and means for exchanging heat in said reservoir with said cooler drainage water.

FIG. 1

FIG. 2
(DAYTIME)

EP 0 517 432 A1

SOLAR
RADIATION

WARM, MOIST AIR

16

12A

20

70

FIG. 2A
(DAYTIME)

13A

WATER
VAPOR

COOLER
DRIER
AIR

25

24

14A

WARMER WATER

26

CONDENSATE

RAIN
WATER

71

22

COLD
WATER

P

15A

30

12A

WARM WATER

33

HEAT

31

FIG. 3A
(NIGHTTIME)

WATER
VAPOR

24

32

35

P

15A

COOL WATER

9

FIG. 3C
(NIGHTTIME)

50

12A

DRAINAGE WATER

51  52  HEAT

57  56
55
58  53
59
15A

FIG. 3B
(NIGHTTIME)

40

41
42  45
NIGHT
AIR

43

46
44
IRRIGATION
WATER  WARMER
WATER

COOLER WATER

15A

# FIG. 4

WATER IN

101

100

100

WATER OUT

102

20

AIR OUT

AIR IN

25

26

24

# FIG. 4A

72

WATER OUT

WATER IN

AIR IN

AIR OUT

70

73

EP 0 517 432 A1

**European Patent Office**

## EUROPEAN SEARCH REPORT

Application Number

EP 92 30 4876

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 450 194 (BARTHEL)<br>* column 1, line 11 - line 34 *<br>* column 4, line 7 - column 5, line 69; figures 1-5 * | 1-3,8 | A01G9/24 |
| Y | | 4-7 | |
| D,Y | US-A-4 981 021 (ASSAF)<br>* column 2, line 44 - column 6, line 9; figures 1,2 * | 4-7 | |
| A | DE-A-3 541 645 (REENTS)<br>* column 4, line 14 - column 5, line 2; figures 3,4 * | 1,3,4 | |
|  |  |  | TECHNICAL FIELDS SEARCHED (Int. Cl.5)<br><br>A01G |

The present search report has been drawn up for all claims

| Place of search | Date of completion of the search | Examiner |
|---|---|---|
| THE HAGUE | 11 SEPTEMBER 1992 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

12